# EUROPEAN PATENT APPLICATION

(11) **EP 0 757 307 A2**
(43) Date of publication of application: **05.02.1997**
(21) Application number: 96202146.5
(22) Date of filing: 30.07.1996
(51) Int. Cl.: G05D 23/19, F23N 5/00

(54) **Arrangement for regulating the temperature in a furnace**

(30) Priority: 01.08.1995 NL 1000909
(71) Applicant: Flynn Controls B.V., 3812 PN Amersfoort (NL)
(72) Inventor: Pendavingh, Rudi, Houten (NL); Van Schaik, Gerrit Johannes, Maarssen (NL)
(74) Representative: Merkelbach, B.

(57) **Abstract**

An arrangement for regulating the temperature in an area of a tunnel furnace for baking products transported through the furnace according to a given loading profile. The area is provided with a temperature sensor and with shut-off burners, with at least one processing unit included in a control circuit for regulating the supply of gas to and for switching at least several burners on and off, which are included in the control circuit, in response to temperature data generated by the temperature sensor. Each burner included in the control circuit is coupled to an air supply line, a pressure gauge in the air supply line and an air pressure measuring value supplied to the processing unit. Said processing unit sets the air pressure in the air supply line at given values.

## Description

The invention concerns an arrangement for regulating the temperature in a zone or area of a tunnel furnace for backing products being transported in a furnace via a specific transport route, according to a specific loading profile. The area is provided with at least one temperature sensor and with shut-off burners coupled to a gas feed line for supplying gas to the burners. The arrangement comprises at least one control circuit, included in a processing unit to regulate gas flow to - and the switching on and off for at least several burners included in the control circuit, in response to the temperature data generated by the temperature sensor. Netherlands' patent number 179624 describes a similar arrangement. In this arrangement there is minimum pressure regulation on the main gas valves of at least one common group of burners. Influenced by this minimum pressure regulation, the main gas valve is brought into a further opened position when the position of the main gas valve, steered by the temperature sensor, is smaller than that required for maintaining minimum pressure, to prevent certain burners in a group, that must burn at minimum positions, based on being activated by the steering signal of the temperature sensor, as a result of opening the other burners in the group, from burning at too low a setting or even be extinguished. This type of minimum-pressure regulation implies the use of so-called atmospheric burners, or burners in which the gas is supplied under pressure by a mixer-burner and, as a result of the kinetic energy of the gas, the surrounding air is taken into the burner. The minimum pressure regulation requires the use of a main gas valve of a type with a very short closing/opening periods, for example, less than 0.5 s., for which only magnetic valves of a specific type are suitable. In the known arrangement, information about the loading profile - i.e. using a pulsator and an electronic sliding register to load the furnace - is used to switch off the burners at locations where there is no product to be baked. For example, this results in a situation in which the end of a sequential series of products to be baked are situated halfway along a specific area in the furnace. The burners in that area are switched on at the location of the products, while the burners in the area are switched off at locations where no more products are. Because the regulator keeps the average temperature constant in the area concerned, the burners switched on will produce extra heat to compensate the heat losses at locations where the burners are switched off. For example, this heat loss affects the furnace on its return course, via the walls, inspection hatches, chimney or conveyor belt. In other words, the burners switched on produce more heat than is required or wanted for backing the products, resulting in unfavourable quality effects. Moreover, the known regulator leads to a situation in which all burners will be switched off when no product is detected during a period equal to that of the products' full cycle in the furnace. Because of the aforementioned heat losses, the burners should be switched on in an unloaded furnace, or at least when the furnace is in operation, to maintain the correct temperature in the baking area. Object of the invention is to provide an arrangement for regulating furnace temperatures, so that adequate temperature regulation can suffice with a gas-pressure regulator which does not require very short closing and opening periods of the valves used such that these valves can be of a simple kind.

Another object of the invention is to provide a regulating arrangement having the possibility to maintain the average temperature in a furnace area at a specific value, for partially loaded or completely unloaded furnaces, without the disadvantage of the burner being automatically switched off at locations where the tunnel furnace is temporarily unloaded.

Another object is to remove other technical disadvantages associated with known arrangements.
These objects are obtained by the invention for the type of arrangement mentioned in the introduction by the fact that each of the burners of the control circuits mentioned is coupled to an air supply line for supplying air to the burners and that a pressure gauge is provided in the air supply line for supplying an air-pressure measuring value to the processing unit and that the processing unit is provided with means for supplying signals for setting air pressure in the air supply line at specific adjusted values.

In a tunnel furnace provided with a temperature regulator, according to the invention, for example, gas is supplied to air/gas mixers using suitable pressure regulators at atmospheric pressure, via a safety valve. The combustible air required is transported under pressure via a control circuit regulator valve to the air/gas mixers. The burners, for example, are pipe burners, each provided with an air/gas mixer. Independent of the fact as to whether a burner is switched on or off, air flows through the mixer and the burner into the baking area. This means that the air flow is constant for each control circuit, irrespective of the number of burners switched on.

In the final design of the arrangement according to the invention, the tunnel furnace is provided with a means of product detection for determining the actual loading profile in the area, and the processing unit is provided with a means for introducing and processing data of certain loading profiles in the area that corresponds to the desired, respective condition for specific products to be baked, where in certain burners are switched on in optional sequence and other burners are switched off and the gas supply is regulated accordingly as well as means for switching on or off specific burners and regulating the supply of gas according to the desired condition if the actual loading profile conforms to any of the specific, potential loading profiles.

By switching on burners in optional sequence, according to the invention, contrary to the known temperature regulator, by using a temperature regulator it is possible to maintain a desired average temperature in a furnace area that is not fully loaded without an undesired increase elsewhere in temperature in the area where the products compensate for heat losses.

Preferably, in an arrangement corresponding to that of the invention the tunnel furnace will be provided with a means of introducing and processing data, in case of a fully-unloaded area, corresponding to a desired condition for specific products to be fired, in which at least one predetermined burner has been switched on or other burners have been switched off, and the gas supply is regulated accordingly. There is an especially advantageous model that incorporates the processing unit in two control circuits, in an initial control circuit that includes several burners placed above the transport route and an initial temperature sensor, and in a second control circuit that includes the burners placed under the transport route and a second temperature sensor. The later model makes it possible to regulate the temperature of the furnace area with the aid of burners above the transport route and with those under it. This offers special advantages in situations where only a limited number of burners have to be switched on, since in such situations it is not desirable, for example, only to switch on several burners under the transport route, since it has been found that switching off burners above the transport route produces a strong temperature decrease in the lowest sections of the furnace.

According to the invention, in a temperature regulator, the processing unit will be preferably provided with means of switching on or off at least one of the burners included in the control circuit concerned, in the event that the temperature, as shown by the temperature data generated, is higher than the established default temperature value, and the air pressure value is higher or lower than a given maximum or minimum adjusted value.

As long as the actual temperature in the furnace area concerned is lower than or equal to that of the temperature setting, such a regulator will determine whether the actual air pressure value is between the maximum and minimum default settings of the actual air pressure and, if the actual air pressure value is lower than the maximum default value, with intervals during which the time can be set, a burner will be switched on in the control circuit, if possible.
Preferably, a certain priority will be predetermined for the burners to be switched on or off, which will be entered into the processing unit.

A tunnel furnace comprises several areas. Preferably, the areas will be provided with an arrangement for regulating the temperature according to the invention, by switching on or off at least one of the burners included in the control circuits concerned, being dependent on the actual air pressure value, whereby the respective processing units are coupled with a central processing unit, which has a means of entering and processing data that correspond to the transport speeds of the products in the furnace, the number of burners in the various control circuits in the areas, the loading profile of the furnace, the default values of the maximum and minimum air pressure values and the desired temperature values.
This type of tunnel furnace is especially suited for baking a variety of products, whereby each product has its own specific requirements with respect to temperature and the burner profile in the furnace. Converting the furnace when changing over to other products to be baked, other than the existing technology of arrangements, is simple and not time-consuming. Since all furnace settings, such as baking time, temperatures, burner profiles for fully and partially loaded and unloaded furnaces, can be stored in the central processing unit according to type of product, regardless the production day, the production-day time and the loading of the furnace, all products of one type can be baked under the same conditions. This produces a constantly high quality level of the products and minimal losses during production.

The invention will be further explained hereinafter, with reference to the accompanying drawings.

Figure 1 shows a diagram of a temperature regulator for a tunnel furnace with several areas.

Figure 2 shows a diagram explaining the regulation of temperature in a control circuit of a furnace area.

Figure 3 shows a diagram of a burner profile in several subsequent sections of a tunnel area, in combination with the loading profile in the area sections.

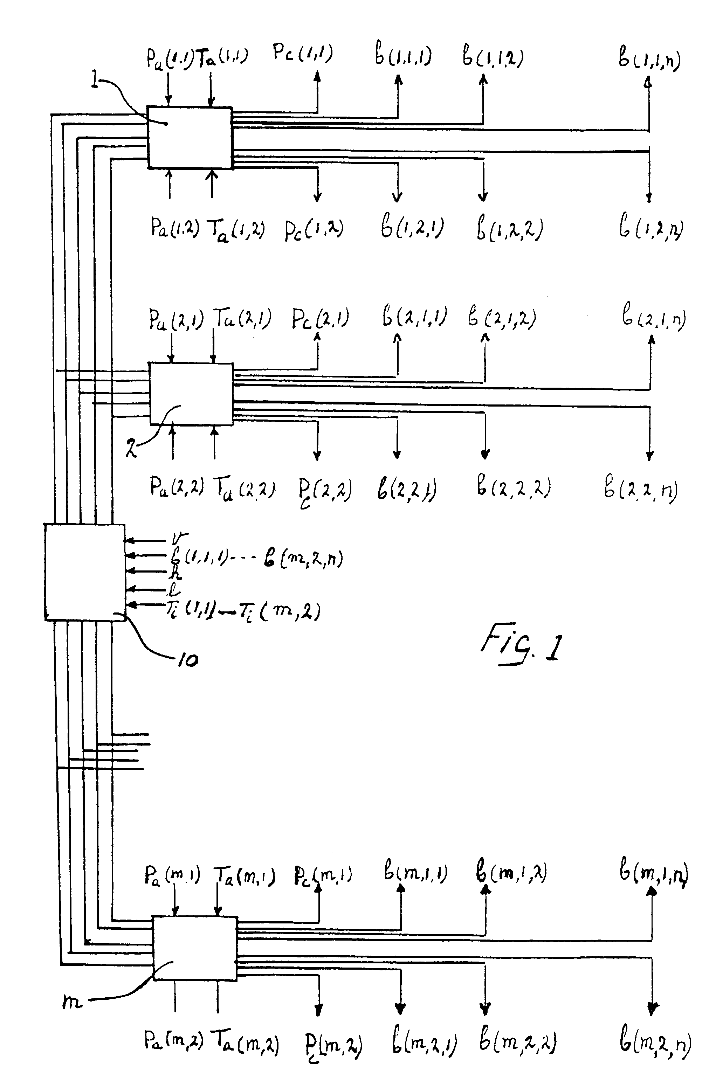

Figure 1 shows a diagram of a temperature regulator with a central processing unit (central computer) 10, linked by means of communication boxes with processing units (area computers) 1, 2, ..., m for regulating temperatures in the separate areas. Each area computer 1, 2 m is included in two control circuits, one control circuit for the burners to be set up above the transport belt and one for those to be set up under the transport belt in the furnace area. Area computer 1 has gates (shown as four entering arrows) for the signals of the top and lower burners generated for the air pressure gauges in the air lines, which represent the actual air pressure p (1.1) and p(1.2), respectively, and for the signals for the above and under the transport belt generated by the temperature sensors, which represent average temperatures T (1.1) and T(1.2), respectively. Area computer 1 has ports p(1.1) and p(1.2) for sending signals to regulate air pressure in the air lines for the top and lower burners, respectively, and ports b(1.1.1), b(1.1.2), ..., to and including ...b(1.1,n), and b(1.2.1), b(1.2.2) to and including b(1.2-.n), respectively. for sending signals to regulate (the switching on and off and adjusting the gas supply) several burners included in the first and second control circuits. Area computers 2 ...m have similar gates and ports shown as corresponding reference characters. The figures in parenthesis refer sequentially to the sequential number of the area computer (1,2 to and including ...m), the top or lower burners (1 or 2) and the sequential number of the burners (1,2 to and including ...n). The central computer 10 has gates (shown with five entering arrows) for signal v that corresponds with the speed of the transport belt and has information about the settings of all the burners B(1.1.1),.....,B(m.2.n) available in the furnace, historical information h about the time intervals to be maintained between switching the burners on and off, the actual loading 1 of the furnace and the desired temperatures T(1.1) to and including T(m.2), for the first furnace area, the top section to and including the last upper area, bottom section.

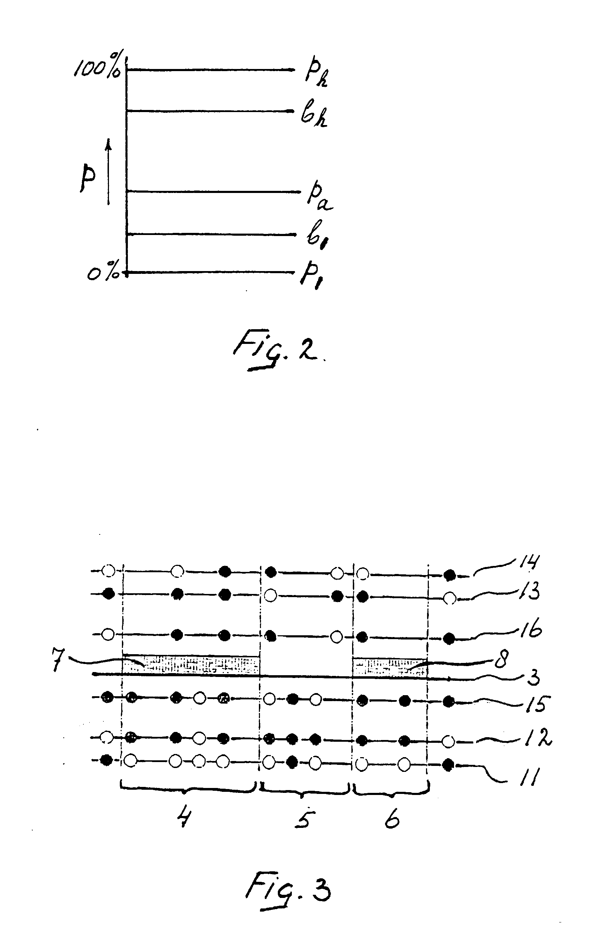

Figure 2 shows a diagram explaining the regulation of the temperature in a control circuit of the furnace area, by switching the burners on or off in the area, induced by a signal from the air pressure gauge in the same control circuit. There are several vertical levels of the burners included in the air supply line of the control circuit concerned, whereby the minimal pressure that the burners can handle is set at 0 percent, and the level in question is
shown as Pₗ. The highest air pressure level at which the burners can work is set at 100 percent, and shown as Pₕ. An air pressure window has been defined between the lowest and highest levels, bordered by a low burner air pressure, bₗ, and a high burner air pressure, bₕ, which can be expressed in percentages of the total pressure range. With a fully loaded or fully unloaded furnace area, the actual air pressure in the air supply line in question will be maintained as follows as a decision parameter in the area computer for switching the burners on or off in the area. As long as the actual temperature in the control circuit is lower than or equal to the desired temperature, and the actual air pressure is higher than the highest burner air pressure (pₐ > bₕ), a burner will be switched in the control circuit, if available, with adjustable intervals. Various priorities can be awarded to the burners of the control circuit in question that are not yet ignited, so that the burner with the highest priority will be switched on. As long as the actual temperature in the control circuit is higher than or equal to the desired temperature, and the actual air pressure is lower than the lowest burner air pressure (pₐ < bₗ), burners that have been switched on will be switched off in the control circuit in intervals that are adjustable. Various priorities can be established for the burners of the control circuit in question that are still ignited, so that the burner with the lowest priority will be the first one to be switched off.

Figure 3 shows a diagram of the burner profile in several sequential sections of a tunnel furnace for a changing loading profile in the area sections. There are schematics showing furnace belt 3 with several subsequent sections, 4,5,6, running through an area of a tunnel furnace. In area sections 4 and 6, belt 3 is fully loaded with products, 7 and 8. In area section 5, belt 3 is empty. The circles at line 11 represent a so-called stand-by profile entered in the central computer, for the burners under furnace belt 3 (the lower burners) in case the furnace belt is not loaded, whereby an open circle represents a burner that has been switched off and a black circle a burner that has been switched on. Similarly, the circles at lines 12,13 and 14 in the central computer represent profiles entered for the burners, viz. profile 12 of the lower burners in the case of loaded furnace belt 3, profile 13 of the upper burners in the case of loaded furnace belt 3, and stand-by profile 14 for unloaded furnace belt 3. The circles at lines 15 and 16 represent the actual burner profiles for the lower and upper burners, respectively, whereby the actual burner profile for lower burners 15 and for upper burners 16, respectively, in the loaded area sections 4 and 6 are regulated by the area computer, in accordance with burner profiles 12 and 13 that have been entered for loaded furnace belt 3, and whereby the actual burner profiles for lower burners 15 and upper burners 16, respectively, are regulated in the unloaded area section 5, by the respective area computer, in accordance with the stand-by profiles 11 and 14 that have been entered for unloaded furnace belt 3. In a tunnel furnace with a provision for a similar temperature regulator in accordance with the invention, all products on the furnace belt are affected by burners below and above the belt, in a sequence that is the same for each product, during transport through the furnace, irrespective of the loading of the furnace belt. A furnace area through which a product runs offers that product and all other products an equal burner profile, whereby the same air pressure is operating at the burners and consequently generating a constant amount of heat.

## Claims

1. Arrangement for regulating temperature in an area of a tunnel furnace for baking products being transported in the furnace via a specific transport route, according to a specific loading profile Said area is provided with at least one temperature sensor and with shut-off burners coupled to a gas feed line for supplying gas to the burners, said arrangement comprises at least one control circuit, included in a processing unit to regulate gas flow to - and the switching on and off for at least several of the burners included in the control circuit, characterized in that each burner included in the control circuit mentioned is coupled to an air supply line for supplying air to said burner, a pressure gauge is provided in the air supply line for supplying an air pressure measuring value to the processing unit, said processing unit is provided with means of supplying signals for setting air pressure in the air supply line at specific adjusted values.

2. Arrangement according to claim 1, characterized in that each burner included in the control circuit is coupled to the air supply line in such a way that a constant supply of air to said burner will be maintained when the supply of gas is shut off.

3. Arrangement according to claims 1 or 2, characterized in that the tunnel furnace is provided with means of product detection for determining the actual loading profile in said area, and said processing unit is provided with means for entering and processing data for certain loading profiles in said area corresponding to the desired respective condition of certain products to be baked, in which certain burners are switched on in optional sequence, or other burners are switched off, and the gas supply is regulated accordingly, means for switching given burners on or off and for regulating the supply of gas in accordance with a desired condition, when the actual loading profile corresponds with any of the established loading profiles.

4. Arrangement according to claim 3, characterized in that the processing unit is provided with means for entering and processing data that, in the case of a fully loaded area, correspond to a desired condition for certain products to be baked, in which at least one predetermined burner is switched on or other burners are switched off and the gas supply is regulated accordingly, and means for switching on at least one burner or switching off other burners and regulating the gas supply, in accordance with the desired condition.

5. Arrangement according to claims 1 - 4, characterized in that said processing unit is included in two control circuits, an initial control circuit wherein several burners are placed above the transport route and wherein initial temperature sensor has been included; and in a second control circuit where burners are been placed below the transport route and a second temperature is included.

6. Arrangement according to one of the claims, 1 - 5, characterized in that said processing unit is provided with means for switching on or switching off at least one of the said burners included in the control circuit concerned, in case the temperature according to the temperature data generated is higher or lower than a given, predetermined, desired temperature value, and the air pressure value is higher or lower than a given maximum or minimum adjusted value.

7. A tunnel furnace, comprising one or more areas, each provided with an arrangement for regulating the temperature according to claim 6, characterized in that the respective processing unit or units are coupled to a central processing unit that is provided with means for entering and processing data which correspond to the transport speed of products in said furnace, the number of burners in the respective control circuits in the area or areas, the loading profile of the furnace, the adjusted values of the maximum and minimum air pressure values and the desired temperature value.
